# EUROPÄISCHE PATENTANMELDUNG

(11) **EP 2 380 951 A2**
(43) Veröffentlichungstag der Anmeldung: **26.10.2011**
(21) Anmeldenummer: 11002171.4
(22) Anmeldetag: 16.03.2011
(51) Int. Cl.: C10J 3/32, C10J 3/38, C10J 3/84, C10J 3/66, C10K 1/02, C10K 1/18, C10K 1/10, C10K 1/16

(54) **Vorrichtung und Verfahren zur Nutzenergiegewinnung aus Bioenergieträgern und anderen organischen Stoffen**

(30) Priorität: 24.03.2010 DE 102010012487
(71) Anmelder: Schwarzwald Bioenergie Technik GmbH, 79848 Bonndorf (DE)
(72) Erfinder: Bendix Dietmar, 04207 Leipzig (DE)
(74) Vertreter: Maucher, Wolfgang

(57) **Zusammenfassung**

Die Erfindung betrifft eine Vorrichtung und ein Verfahren zur Nutzenergiegewinnung aus Bioenergieträgern und anderen organischen Stoffen. Die erfindungsgemäße Vorrichtung weist einen Reaktor auf, der in seiner Reaktorkammer eine Hochtemperaturzone hat, die vom oberen Reaktorkammer-Innenraum durch einen Auffangdom und vom unteren Reaktor-Innenraum durch einen Windsichterboden abgegrenzt ist, der zur Erzeugung einer Wirbelschicht für Gase und/oder Gasgemische und zum Abtransport von Schlacke und Asche für diese durchlässig ist. Für das erfindungsgemäße Verfahren ist kennzeichnend, dass die bei der thermischen Umsetzung erzeugte Abwärme über einen Wärmetauscher der in kontinuierlichem Prozeß nachfolgenden Biomasse während deren Pyrolyse zugeführt wird.

## Beschreibung

Die Erfindung betrifft eine Vorrichtung zur Nutzenergiegewinnung aus Bioenergieträgern und anderen organischen Stoffen. Die vorliegende Erfindung befasst sich mit einem insbesondere in der eingangs erwähnten Vorrichtung durchführbaren Verfahren. Eine solche Vorrichtung und ein solches Verfahren können beispielsweise zur Erzeugung eines gasförmigen Energieträgers eingesetzt werden, wobei der gasförmige Energieträger zur Wärme- und Elektroenergieerzeugung in einem Motor beziehungsweise einer Gasturbine oder als Ausgangsstoff für chemische Synthesen, zum Beispiel der Fischer-Tropsch-Synthese, einsetzbar ist.

Bekannt sind bereits verschiedene Verfahren, die zur biologischen Wandlung von Biomasse und Reststoffen, zum Beispiel zur Biogaserzeugung, Kompostierung, Erzeugung und Abbau organischer Säuren, zur thermischen Wandlung von Biomasse und Reststoffen, zum Beispiel Pyrolyse, Erzeugung von Pyrolyseöl, Pyrolysekoks und Slurries, sowie zur thermochemischen Wandlung von Biomasse und Reststoffen, zum Beispiel zur Vergasung und Verbrennung von Biomasse und Reststoffen, bestimmt sind.

Auf dem Gebiet der thermochemischen Wandlung fester Biomasse und Reststoffe sind Technologien zur gestuften thermochemischen Wandlung fester Biomasse und Reststoffe bekannt. Je nach räumlicher Trennung der Prozessschritte sind diese Verfahren als Trocknung, Pyrolyse, Vergasung oder gestufte Verbrennung bekannt. Je nach Kontakt zwischen den festen Reststoffen beziehungsweise Biomasse und den weiteren Ausgangsstoffen sind die Verfahren als Festbett, Wanderbett, Bewegtbett, stationäre Wirbelschicht oder zirkulierende Wirbelschicht bekannt.

Bei der Wirbelschichtvergasung werden die stationäre und die zirkulierende Wirbelschichtvergasung unterschieden. In einem Wirbelschichtvergaser wird der zu vergasende feinkörnige Feststoff, dessen Kantenlänge kleiner 30 mm betragen sollte, von unten durch einen Anströmboden von den gasförmigen Ausgangsstoffen durchströmt. Eine Wirbelschicht entsteht, wenn die von unten nach oben strömenden gasförmigen Stoffe eine Geschwindigkeit aufweisen, die höher als die Sinkgeschwindigkeit der Feststoffe ist. Gibt es Bereiche im Reaktor, wo die Geschwindigkeit der von unten nach oben strömenden Stoffe gleich der Sinkgeschwindigkeit des überwiegenden Anteils der Feststoffe ist, so wird dieser Zustand als stationäre Wirbelschicht bezeichnet. Wird die Gasgeschwindigkeit weiter erhöht, expandiert die Wirbelschicht, bis der Feststoff nahezu gleichmäßig über die Reaktorhöhe verteilt ist. Das vom Produktgas mitgerissene Brennmaterial wird in einem nachgeschalteten Heißzyklon vom Produktgas getrennt und in den Reaktor zurückgeführt. Diese Technologie wird als zirkulierende Wirbelschicht bezeichnet. Die thermochemisch wandelbaren Feststoffe haben typischerweise eine geringere Kantenlänge als die für Festbettreaktoren verwendeten Feststoffe.

In einem Festbettvergaser sind die Biomasse oder Reststoffe in einer Schüttschicht den anderen Ausgangsstoffen ausgesetzt. Die einzelnen Stücke der Biomasse oder Reststoffe bewegen sich aufgrund der Schwerkraft und der kontinuierlichen Zersetzung in dieser Schüttschicht vom Beschickungsort über verschiedene Zonen der Brennstoffschüttung zum Austragungsort der Asche. Je nach Stoffflussrichtung werden Gegenstrom- oder Gleichstrom oder Querstromvergaser, Doppelfeuerungsvergaser oder Zweistufenvergaser unterschieden. Problematisch bei diesem Verfahren sind die gleichmäßige Kontaktierung der Biomasse/Reststoffe mit den anderen Ausgangsstoffen beziehungsweise Reaktionsprodukten, die gleichmäßige Bewegung der Feststoffe und die Nutzung von Restwärme der Reaktionsprodukte zur Erzielung eines ausreichenden energetischen Wirkungsgrades.

Im Wanderbett werden die Feststoffe durch mechanische Hilfsmittel vom Eintragsort zum Ascheaustrag bewegt, ohne dass eine technologierelevante Durchmischung der Feststoffe erfolgt. Die Probleme sind mit denen von Festbettreaktoren vergleichbar, wenn auch in abgeminderter Form.

Im Bewegbett erfolgt die technologierelevante Bewegung der Feststoffe sowohl mit mechanischen Hilfsmitteln als auch mittels der gasförmigen Ausgangsstoffe. Dadurch kann eine wesentlich bessere Kontaktierung der Stoffe im Reaktor mit dem Ergebnis der Homogenisierung der Temperatur und Konzentrationsverläufe im Reaktor erreicht werden.

Da die Erfindung den Technologien der Vergasung im Bewegtbett und in der zirkulierenden Wirbelschicht nahe steht, soll im weiteren nur auf diese Bezug genommen werden.

Aus der DE 10 2006 058 673 A1 kennt man bereits ein Verfahren sowie eine Vorrichtung zur Schwachgaserzeugung aus organischen Energieträgern, mit dem bei Einsatz verschiedener organischer Einsatzstoffe stabil und energetisch effizient eine gute Schwachgasqualität realisiert werden kann. Dazu wird Koks aus der partiellen Oxidation des Energieträgers intern als Wärmeträger zur Wärmerückgewinnung genutzt. Der Koks wird mit frischem Brennstoff vermischt, infolge der Wärmeabgabe wird der Einsatzstoff getrocknet und pyrolysiert. Anschließend erfolgt die Teiloxidation. Durch ständiges Bewegen des Materials und mechanische Beräumung der Austrittsöffnungen des Oxidationsmittels wird eine Verschlackung verhindert. Das Gas durchströmt einen heißen Bereich in dem die Teere gespalten werden. In der DE 10 2006 058 673 A1 sind dazu apparative Gestaltungen eines Reaktors vorbeschrieben, um diesen thermochemischen Prozess zu realisieren. Der Gasaustritt ist so angeordnet, dass das Gas in einer Wirbelströmung zum Austritt hin strömt, wodurch aufgrund der zentrifugalen Kräfte eine Abreinigung des Gases von Partikeln erfolgt.

Aus der EP 1 754 771 A2 ist bereits ein Verfahren zur Verwertung von biologischen Materialien bekannt, bei dem zur verbesserten Verwertung von biologischen und organischen Materialien, insbesondere zur Erzeugung von Gas vorgeschlagen wird, mindestens zwei Biomasseverwertungsverfahren, insbesondere eine Biomassevergasung und eine Biomassevergärung, miteinander zu kombinieren. Auch bei diesem Verfahren ist nachteilig, dass die eingesetzten Biomassen noch nicht vollständig umgesetzt und die Reaktionsprodukte noch nicht ausreichend energetisch verwertet werden können.

Die bekannten Technologien der thermochemischen Wandlung von fester Biomasse und Reststoffen weisen eine hohe Empfindlichkeit bezüglich der eingesetzten festen Biomasse beziehungsweise Reststoffe auf. Besonders enge Grenzen sind der festen Biomasse/Reststoff bezüglich dem Aschegehalt, dem Ascheschmelzverhalten, dem Chlor-, Schwefel- und Kaliumgehalt, dem Entgasungsverhalten bezüglich der Bildung flüssiger und kondensierbarer Phasen, dem Wassergehalt, der Stückigkeit und dem Fließverhalten gegeben. Weitere Nachteile der bekannten Verfahren und Vorrichtungen zur thermochemischen Wandlung fester Biomasse und Reststoffe liegen in einem relativ hohen technischen Aufwand und einer meist für Folgeprozesse unzureichenden Qualität der gasförmigen, flüssigen und festen Reaktionsprodukte. So treten Probleme bei der Gasqualität in Bezug auf den Gehalt an festen Partikeln wie Ruß, Asche und Staub, flüssigen oder kondensierbaren Bestandteilen wie Teer-, Wasser- und Waschflüssigkeitstropfen und gasförmigen unerwünschten Komponenten wie Furan, Benzol, Benzoapyren und Naphthalin auf. Flüssige und in Flüssigkeiten gelöste Reaktionsprodukte müssen meist als überwachungspflichtiger Abfall entsorgt werden. Die festen Reaktionsprodukte wie Schlacke, Asche, Staub und aus Flüssigkeiten entfernte Schwebstoffe erfüllen in den meisten Fällen weder die Anforderungen an Düngemittel, an Regelbrennstoffe noch an deponierbare Stoffe, so dass auch diese kostenpflichtig entsorgt werden müssen. Weiterhin sind die bisher bekannten Verfahren durch eine geringe energetische Effizienz gekennzeichnet.

Es besteht daher die Aufgabe, eine Vorrichtung sowie ein Verfahren zur thermochemischer Wandlung fester Biomasse und Reststoffen zu schaffen, die eine stabile und energetisch effiziente Arbeitsweise erlauben, die Umsetzung eines breiten Spektrums von Feststoffen sicherstellen können und sich durch eine auch für nachfolgende Prozesse ausreichende Qualität der gasförmigen, flüssigen und festen Reaktionsprodukte auszeichnen.

Die erfindungsgemäße Lösung dieser Aufgabe besteht bei der Vorrichtung der eingangs erwähnten Art in den Merkmalen des geltenden Patentanspruchs 1. Das erfindungsgemäße Verfahren umfasst demgegenüber die Merkmale des geltenden Patentanspruchs 31. In den Unteransprüchen 2 ff und 32 ff sind besonders vorteilhafte Ausführungsbeispiele der erfindungsgemäßen Vorrichtung beziehungsweise des erfindungsgemäßen Verfahrens noch näher beschrieben.

Durch die erfindungsgemäße Vorrichtung und das erfindungsgemäße Verfahren wird erstmals ein Gesamtprozess geschaffen, der stabil arbeitet, der einen hohen Umsetzungsgrad der eingesetzten Biomasse und Reststoffe realisieren kann und der gleichzeitig außer Wärme und energetisch nutzbarem Gas ausschließlich energetisch nicht mehr verwertbare und somit deponierfähige Abfallstoffe produziert. Dabei sind die energetisch nicht mehr verwertbaren Abfallstoffe Salzlösungen und ein Schlacke-Aschegemisch. Die Salzlösungen können nach Entfernung eventuell vorhandener Schweb- und Geruchsstoffe und der Einstellung des pH-Wertes in die örtliche Kanalisation gegeben oder als Nährlösung einer Biogasanlage zugeführt werden. Das Schlacke-Aschegemisch kann als Zuschlagstoff einer Kompostierung zugegeben oder als Düngemittel ausgebracht werden.

Der stabil arbeitende Gesamtprozess kann dabei sowohl deutliche Schwankungen bei der Zusammensetzung und Größe der festen Einsatzstoffe ausgleichen und eine stabile Abgabe eines gleichmäßig zusammengesetzten Gases realisieren. Wünschenswert sind Biomasse beziehungsweise Reststoffe mit einem Heizwert von ≥ 10 MJ/kg.

Die unterschiedliche Zusammensetzung und Größe der festen Biomasse/Reststoffe wird durch Mischen in einem Bioenergieträgerdoseur vergleichmäßigt. Im Falle des Einsatzes von festen Einsatzstoffen, die volumenmäßig einen hohen Anteil an flüssigen Phasen aufweisen oder bei der thermochemischen Wandlung bilden und/oder die feucht sind, können Additive, wie Kalk oder Holzkohle/Aktivkohle in den Bioenergieträgerdoseur zugegeben werden. Dabei kann die im Gesamtprozess an verschiedenen Punkten entstehende Holzkohle/Aktivkohle vorteilhafter Weise dazu eingesetzt werden.

Die Einmischung von Kalk und/oder Kalkgranulat kann zur Erhöhung des Asche-Schmelzpunktes und zur Bildung von Sollbruchstellen in der Schlacke dienen. Im Verfahren dient das Kalkgranulat weiterhin als Bettmaterial und als Mutterkörner für die Bildung von Asche-Schlacke-Kalkagglomeraten, welche nach Erreichen einer ausreichenden Größe aus dem thermochemischen Prozess ausgeschleust werden, im erkalteten Zustand nahezu staubfrei händelbar sind, während ihres Einsatzes als Düngemittel durch Wasseraufnahme zerfallen und die in ihnen enthaltenen Mineralien in pflanzenverfügbarer Form in den Boden bringen.

Die im Bioenergieträgerdoseur durchmischte und vergleichmäßigte feste Biomasse/Reststoffe werden einem Vorreaktor zugeführt. Dabei ist der zur Pyrolyse der festen Biomasse/Reststoffe bestimmte Vorreaktor mittels eines Reaktors indirekt beheizbar. Der Vorreaktor wird dazu zumindest bereichsweise durch den Reaktor geführt, so dass die im Reaktor ablaufenden Reaktionen und Wärmestrahlungen eine ausreichende Prozesstemperatur und eine ausreichende Wärmemenge für die gewünschten Reaktionen in diesem Teil des Vorreaktors ermöglichen. Der Vorreaktor ist dabei vorteilhafterweise rohrförmig ausgebildet, während der Reaktor vorzugsweise als stehender Hohlzylinder mit einem am Boden befindlichen Austrag des Asche-Schlacke-Gemisches ausgestaltet ist. Nach dem Einbringen der festen Biomasse/Reststoffe aus dem Bioenergieträgerdoseur in den Vorreaktor durchlaufen die feste Biomasse/Reststoffe zuerst einen warmwasserwandtemperierten Teil und danach den durch externe Reaktionen von außen beheizten Teil des Vorreaktors und werden dabei getrocknet und pyrolysiert. Dabei werden die festen Biomasse/Reststoffe durch eine Transporteinrichtung im Vorreaktor vorwärts transportiert, wobei durch die Transporteinrichtung immer definierte Volumina in Konstantabständen mit definierter Umwälzbewegung realisiert werden. Um Stauungen und Verstopfungen zu beheben, kann die Transporteinrichtung die Bioenergieträger auch rückwärts transportieren. Der Transport eines definierten Volumens mit definierter Umwälzbewegung wird insbesondere durch eine nicht mittige Anordnung der Transporteinrichtung im ersten Reaktor sowie durch eine fliegende Lagerung realisiert. Weiterhin dienen dazu auch Drehmomentstützen, die so im ersten Reaktor positioniert sind, dass sie ein Ausweichen der festen Biomasse/Reststoffe in den oberen Bereich des ersten Reaktors verhindern. Gleichzeitig können diese Drehmomentstützen auch noch zur Eindüsung von Luft dienen. Vorteilhafterweise ist die insgesamt in den ersten Reaktor eingebrachte Luft erwärmt.

Durch die Transportvorrichtung wird in den Bereichen der Trocknung und der Pyrolyse immer eine ausreichende Menge an grobkörnig porösem Material fixiert, welches den Wärmeeintrag von der Reaktorwand in den zu trocknenden und zu pyrolysierenden Feststoff sichert und sich gegebenenfalls bildende flüssige Phasen bis zu deren thermischer Zersetzung zwischenlagern kann. Somit wird eine quasi homogene Aufheizgeschwindigkeit des Feststoffes begünstigt, bei dem die Freisetzung unerwünschter Entgasungsprodukte, wie Benzol und deren Vorläufersubstanzen, minimiert ist. Unterstützt wird der Prozess durch das definierte Einbringen von Luft von unten in den bewegten Feststoff als Pyrolyseunterluft, beispielsweise durch Öffnungen in den Drehmomentstützen. Zusätzlich oder stattdessen kann auch im oberen Bereich des Vorreaktors Luft als Pyrolyseoberluft eingetragen werden, wodurch ein Abbrand der an der Wandung des Vorreaktors befindlichen Stoffe realisiert wird und gleichzeitig der Austritt von Pyrolysegas aus der Eintragsöffnung für die festen Biomasse/Reststoffe in den Vorreaktor verhindert wird.

Die Ergebnisse der Pyrolysereaktion im Vorreaktor sind pyrolysierte Feststoffe, im wesentlichen Holzkohle und Pyrolysegase, die neben Feststoffen in Form von Stäuben auch zahlreiche Kohlenwasserstoffe enthalten. Die Temperaturen dieser Produkte betragen am Ende des Vorreaktors zwischen 300° und 700° C.

Die so getrockneten und durch die Transport- oder Fördereinrichtung weitergeleiteten Stoffe werden im Pyrolyseabschnitt des Vorreaktors bei Temperaturen zwischen 500° bis 600° C in Kohlenmonoxyd, Kohlendioxyd, Wasserstoff, Wasserdampf, flüchtige, lang- und kurzkettige Kohlenwasserstoffe und Kohle sowie in Pyrolysekoks im wesentlichen vollständig umgesetzt. Die Vollständigkeit der Umsetzung kann durch die Fördergeschwindigkeit gesteuert werden. Dies kann in Abhängigkeit der konkret eingesetzten Stoffe und den konkreten Abmessungen der Vorrichtung optimiert werden.

Die Pyrolyseprodukte werden vollständig durch eine vorzugsweise schachtartige Führung, die im Bereich der Zuführung zum Reaktor eine zweite Transporteinrichtung zur Zufuhr der mindestens festen Pyrolyseprodukte in den mittleren, als Heißtemperaturzone ausgebildeten Teil des Reaktors transportiert. Dabei kann die zweite Transporteinrichtung die gleiche apparative Ausgestaltung aufweisen, wie die dem Vorreaktor zugeordnete erste Transporteinrichtung.

Nachdem die Pyrolyseprodukte in dem als Heißtemperaturzone ausgebildeten mittleren Teil des Reaktors angekommen sind, werden sie mit Gasen, Gasgemischen und/oder Wasserdampf, vorteilhafterweise erwärmter Luft, welche insbesondere durch einen Windsichterboden in den mittleren Teil des Reaktors eingeleitet werden, in Kontakt gebracht. Wasserdampf wird vor allem dann miteingeleitet, wenn bei der Realisierung der notwendigen Strömung durch Luft ein zu hohes Sauerstoffangebot im Reaktionsbereich des Reaktorinnenraums vorhanden wäre. Im mittleren, als Heißtemperaturzone ausgebildeten Teil des Reaktors finden Verbrennung, Vergasung und Cracken der Pyrolyseprodukte und Reststoffe bei Temperaturen bis 1.200° C statt.

Die Eintrittsöffnungen für die Gase, Gasgemische und/oder den Wasserdampf sind im unteren Bereich des die Heißtemperaturzone aufweisenden mittleren Teiles vorgesehen und der Durchmesser der Öffnungen nimmt mit der Entfernung von der Mitte des Windsichterbodens des Reaktors ab. In der Mitte des Windsichterbodens des Reaktors ist aus Gründen der Strömungsführung und der Stabilität vorzugsweise keine Eintrittsöffnung für Gase vorgesehen. Aufgrund des Eintrages mit einem gasförmigen Medium steigen auch die festen Bestandteile nach oben und bilden entsprechend ihrer Dichte eine qualitative Schichtung aus. Im unteren Bereich der Heißtemperaturzone, nahe den Eintrittsöffnungen für die Gase, wird im wesentlichen Asche und Schlacke, darüber hauptsächlich noch nicht und noch nicht vollständig umgesetzte Biomasse/Reststoffe und im oberen Bereich, nahe dem Auffangdom, im wesentlichen Holzkohle in Schwebe gehalten. Aufgrund dieser sich ausbildenden Schichtung der Feststoffe im Bereich zwischen den Eintrittsöffnungen und dem Auffangdom kann auch die weitere Umsetzung der noch nicht vollständig umgesetzten Bestandteile sehr gut realisiert werden. Im unteren Bereich der Heißtemperaturzone liegt noch ausreichend Sauerstoff vor, um die noch nicht vollständig ausgebrannte Schlacke weitgehend auszubrennen. Dadurch entsteht auch ein CO₂-haltiges Gas, welches mit im Prozess gebildeten kohlenstoffreichen Partikeln eine endotherme Reaktion eingehen kann. Bei dem Durchtritt des Gases durch die Holzkohleschicht kann dieses Gas noch von längeren Kohlenwasserstoffen gereinigt werden, da diese mit der Holzkohle in Wechselwirkung, zum Beispiel Adsorption, treten können. Diese Schichtung der festen Bestandteile hat den weiteren Vorteil, dass beispielsweise gezielt Holzkohle aus dem oberen Bereich der Heißtemperaturzone abgezogen werden kann. Weiterhin können die gasförmigen Produkte ebenfalls im oberen Bereich der Heißtemperaturzone durch Öffnungen oder dergleichen Verbindungskanäle im Auffangdom in den darüber liegenden oberen Reaktorkammer-Innenraum austreten, ohne dass größere Mengen noch reaktiver Gase mitausgetragen werden.

Der Auffangdom trennt im Reaktor den als Hochtemperaturzone ausgebildeten mittleren Reaktorbereich, in welchem intensive Reaktionen stattfinden, vom oberen Reaktorkammer-Innenraum, der als Wärmeübertragungszone vorgesehen ist, in welcher der Vorreaktor durch die gasförmigen Produkte und die Wärmestrahlung des Auffangdoms beheizt wird.

In dem als Heißtemperaturzone vorgesehenen mittleren Reaktorbereich befindet sich eine Rührvorrichtung mit vorzugsweise radialen Rührarmen, an denen insbesondere paddelartige Rührflächen vorgesehen sind. Diese Rührvorrichtung dient einerseits zur Durchmischung der in der Hochtemperaturzone befindlichen Feststoffschichtung, um eine möglichst vollständige Umsetzung aller konvertierbaren Bestandteile zu erreichen, - andererseits werden dadurch das Kalkgranulat und die sich daraus durch Asche- und Schlackeanhaftungen gebildeten Granulate bewegt. Die Rühreinrichtung ist so angeordnet und/oder bemessen, dass damit ein Umwälzen und Zerteilen schwererer Feststoffe am Windsichterboden des Reaktors realisiert werden kann und gleichzeitig Kalk-Schlacke-Aschegranulat durch die Öffnungen des Windsichterbodens zu schieben und/oder zu drücken und/oder zu leiten sind. Damit wird für einen konstanten Austrag an Schlacken und Aschen gesorgt. Um Verstopfungen und Stauungen zu vermeiden, kann die Rührvorrichtung auch vor- und rückwärts bewegt werden. Weiterhin kann die Rührvorrichtung auch Bestandteile, die sich nicht zerteilen lassen und die damit nicht durch die Öffnungen im Windsichterboden des mittleren Teiles des Reaktors passen, in den Bereich des Störstoffaustrages befördern, der eine größere Öffnung besitzt. Dort werden diese Bestandteile in ein Medium, vorzugsweise Sand, aufgenommen. Dieses Medium verklebt nicht mit den Störstoffen und kann von Zeit zu Zeit ausgetragen werden.

Der untere Reaktorkammer-Innenraum des Reaktors wird nach oben durch den Windsichterboden und nach unten durch den Reaktorboden mit Schlackeaustrag und zu den Seiten durch die Umfangswandung des Reaktors gebildet. Von oben kann durch den Windsichterboden hindurch Asche, Schlacke und Kalk-Schlacke-Aschegranulat in den unteren Reaktorkammer-Innenraum des Reaktors eindringen, während von der Seite ein vorgewärmtes Luft-Wasserdampf-Gemisch tangential eintreten und durch eine separate Öffnung auch zirkulierendes Bettmaterial vom Heißgasfilter einströmen kann. Im unteren Reaktorkammer-Innenraum des Reaktors findet der nahezu vollständige Ausbrand des Kalk-Schlacke-Aschegranulates und ein teilweiser Umsatz des zirkulierenden Bettmaterials statt. Das ausgebrannte Kalk-Schlacke-Aschegranulat wird durch den im Reaktorboden befindlichen Schlackeaustrag aus dem Reaktor in eine Vorlage transportiert, von welcher aus das ausgekühlte Kalk-Schlacke-Aschegranulat seiner weiteren Verwendung, zum Beispiel als Düngemittel, zugeführt werden kann. Soweit die Öffnungen im Windsichterboden des Reaktors nicht durch die an den Rührarmen befindlichen Rührflächen blockiert werden, strömt das Luft-Wasserdampf-Gemisch mit dem zirkulierenden Bettmaterial aus dem unteren Reaktorkammer-Innenraum durch die Öffnungen im Windsichterboden in die Hochtemperaturzone des Reaktors ein.

Die Produkte, die aus dem oberen Reaktorkammer-Innenraum des Reaktors austreten, bestehen aus einem möglichst teerarmem Rohgas mit den Hauptbestandteilen Stickstoff, Kohlenmonoxyd, Wasserstoff, Kohlendioxyd, Methan und zirkulierendes Bettmaterial. Das zirkulierende Bettmaterial besteht aus pulverförmigem Additiv, feiner Asche und Kohlenstoffpartikeln, welche während der thermochemischen Umsetzung aus fester Biomasse/Reststoffe gebildet werden.

Die aus dem oberen Reaktorkammer-Innenraum ausströmenden und ca. 500° bis 700° C heißen Produkte werden zu einer Kühlvorrichtung geleitet. Die Kühlvorrichtung ist ein Wärmetauscher, der in Form eines zylindrischen Ringspaltes ausgebildet ist. Dabei ist zu berücksichtigen, dass diese Kühlvorrichtung so konzipiert sein sollte, dass die Wändungstemperatur der Kühlvorrichtung sich um maximal 100 K von der Temperatur der gasförmigen Produkte unterscheidet. Dies ist erforderlich, um eine Kondensatbildung an den Wandungen der Kühlvorrichtungen zu verhindern. Dazu werden die aufzuwärmenden Gase oder Luft erst in den inneren zylindrischen Teil des Wärmetauschers und danach in den äußeren Ringspalt des Wärmetauschers geleitet. Diese erwärmten Gase oder Luft werden dann in den Reaktor eingeleitet. Weiterhin ist es vorteilhaft, wenn in der Kühlvorrichtung eine hohe Strömungsgeschwindigkeit der Produkte realisiert wird, da damit Ablagerungen des in den Produkten enthaltenen zirkulierenden Bettmaterials vermieden werden können.

Das zu erwärmende Gas oder die Luft kann auch in einem Bypass an den Wärmetauscher vorbeigeleitet werden, um einen schnellen Anlagenstart realisieren zu können und um eine thermische Reinigung der Innenwandung zu erreichen.

Nachdem die Produkte durch die Kühlvorrichtung getreten sind, beträgt ihre Temperatur zwischen 300° und 550° C. Mit Hilfe eines weiteren Wärmetauschers, insbesondere gleicher Bauart, kann die Temperatur der Produkte auf ein für die Heißgasreinigung vorteilhaftes Niveau eingestellt werden. Die in diesem zweiten Wärmetauscher erwärmte Luft kann zu weiteren Prozessen, zum Beispiel zu Heizzwecken oder zur Trocknung, verwendet werden.

Die Produkte werden dann vorzugsweise mit einem Additiv versehen, welches als Ionentauscher, als Trennmittel und als Bestandteil des zirkulierenden Bettmaterials dient und mit dem Kalk-Schlacke-Aschegranulat aus dem Prozess ausgetragen wird. Durch das Additiv werden kondensierende Kalium- und Natriumsalze absorbiert, wodurch eine Korrosion in den nachfolgenden Bauteile verringert und weitere nicht energetisch nutzbare Bestandteile der gasförmigen Produkte entfernt werden. Die Wirkung des Additivs als Trennmittel dient insbesondere dazu, den Filterkuchen auf der Oberfläche der Filterkerzen leichter entfernen zu können. Dabei ist vorteilhaft, wenn das Additiv intervallartig den Produkten zugegeben wird.

Die eventuell mit dem Additiv angereicherten Produkte werden dann in einen Heißgasfilter geleitet. Dieser Heißgasfilter besteht aus einem Behälter mit Filterkerzen. Die Bereiche des Produkteintrittes sind vorzugsweise tangential und/oder mit Prallblechen ausgebildet, wodurch die Filterkerzen vor größeren und härteren Feststoffen in den Produkten geschützt werden und wodurch weiterhin eine vorteilhafte Gasverteilung im Behälter erreicht wird.

Die Filterkerzen sind innen hohl und bestehen aus einem porösen Material, vorzugsweise aus einem porösen keramischen Material, wobei die Porosität von der äußeren zur inneren Oberfläche zunimmt. Vorzugsweise kann die äußere Oberfläche mit einer oberflächenaktiven feinen porösen Schicht beschichtet sein, die eine bessere Filterung der Feststoffen aus den gasförmigen Produkten ermöglicht. Die äußere Oberfläche kann vorzugsweise auch mit einem Metallnetz überzogen sein, welches insbesondere thermisch gespritzt aufgetragen ist, wodurch die Wärmeleitung verbessert und die Temperaturspitzen aufgrund lokaler Reaktionen vermieden werden.

Durch die Filterkerzen werden die gasförmigen Produkte vom zirkulierenden Bettmaterial getrennt und über die inneren Hohlräume ausgetragen. Aufgrund der geringeren Durchmesser der inneren Hohlräume der Filterkerzen erfolgt eine Beschleunigung der gereinigten gasförmigen Produkte und diese werden über den oberen Teil des Behälters, der von dem anderen Teil des Behältervolumens gasdicht abgetrennt ist, ausgetragen. Das sich auf der äußeren Oberfläche der Filterkerzen ablagernde zirkulierende Bettmaterial bildet einen Filterkuchen, der in Zeitintervallen entfernt werden muß. Dies erfolgt durch ein kurzzeitiges Einblasen von beispielsweise Stickstoff in Form einer Jetimpulsreinigung. In jedem Fall muß ein Gas eingeblasen werden, welches inert ist und nicht mit den gasförmigen Produkten und dem Filterkerzenmaterial reagiert. Dadurch lösen sich Teile des Filterkuchens von der Oberfläche und fallen in den unteren Teil des Behälters, um dort über einen quasi gasdichten Austrag ausgetragen werden zu können. Das zirkulierende Bettmaterial enthält insbesondere das Additiv mit den gebundenen Salzen, Stäuben und Kokspartikeln. Es wird vorzugsweise in den unteren Reaktorkammer-Innenraum des Reaktors zurückgeführt, dort partiell mit dem vorgewärmten Luft-Wasserdampf-Gemisch umgesetzt und entweder als zirkulierendes Bettmaterial mit dem vorgewärmten Luft-Wasserdampf-Gemisch wieder in die Heißtemperaturzone des Reaktors eingetragen oder mit dem Kalk-Schlacke-Aschegranulat ausgetragen.

Die Filterkerzen sind vorzugsweise federbelastet eingespannt, wodurch Thermospannungen reduziert werden und wodurch die Filterkerzen bei Verbrauch oder Bruch leicht ausgetauscht werden können.

Die so gereinigten gasförmigen Produkte werden über einen Sicherheitsfilter zur Entfernung insbesondere von Bruchstücken von Filterkerzenmaterial zu einem Wäscher weitergeleitet. Die gasförmigen Produkte haben dann noch eine Temperatur von 250° bis 400° C.

Der Wäscher besteht vorzugsweise aus einem senkrecht angeordneten Rohr, durch das die gereinigten gasförmigen Produkte von oben nach unten geleitet werden können. Die danach gereinigten Gase werden über einen Gasaustritt, vorzugsweise über einen Gasströmungsbogen mit einem Winkel von mindestens 90° zur Strömungsrichtung des Gasstromes, und einen Tropfenabscheider ausgetragen. Die so gereinigten Gase können dann entweder einer energetischen Nutzung beispielsweise in einem Motor oder einer Turbine oder einer stofflichen Nutzung beispielsweise einer Fischer-Tropsch-Synthese zugeführt werden.

Der Wäscher arbeitet als Abscheider für Feststoffe und kondensierbarer Stoffe. Dabei werden quer zur Gasströmung und zur Fallrichtung der Feststoffe und der kondensierbaren Stoffen in den gasförmigen Produkten Flüssigkeitstropfen, vorzugsweise eine Wasser-Rapsölmethylester-Emulsion, eingedüst. Auf der kalten Oberfläche dieser Tropfen können kondensierbare Bestandteile der gasförmigen Produkte kondensieren, weiterhin nehmen diese Tropfen die eventuell noch vorhandenen Feststoffe auf ihrer Oberfläche auf und tragen sie nach unten aus. Dabei werden im oberen Drittel des Wäschers überwiegend große Tropfen eingedüst. Aufgrund der noch relativ hohen Temperatur der gasförmigen Produkte werden sich die Tropfen relativ schnell bis zur Taupunkttemperatur der gasförmigen Produkte, welche vom Wasserdampfgehalt der gasförmigen Produkte und somit von der Feuchtigkeit der eingesetzten festen Biomasse und Reststoffe abhängt, erwärmen und danach die an sie herangeführte Wärme zur Verdunstung von Wasser nutzen. Die Tropfen müssen so groß sein, dass auf dem Weg durch das heiße Gas maximal die Hälfte des im Tropfen vorhandenen Wassers verdampft, so dass an der Wand des Wäschers ausreichend viel Wasser ankommt und ein Wasserfilm entsteht, der einerseits zur ständigen Abreinigung der Wand des Wäschers führt und der andererseits die Tropfen der nachfolgenden Düsen einschließen kann, ohne dass feinste Aerosole entstehen. Im mittleren Drittel des Wäschers werden überwiegend kleine Tropfen eingedüst, da diese eine höhere aktive Oberfläche und somit Stoffaufnahmefläche bieten und dadurch besonders geeignet sind, die in den gasförmigen Produkten noch vorhandenen Feststoffen und kondensierten und kondensierbaren Stoffen aufzufangen. Im unteren Drittel des Wäschers werden wieder überwiegend größere Tropfen eingedüst, die insbesondere die kleineren Tropfen einfangen und aufsammeln können.

Durch die große Kontaktfläche und die weitestgehend homogene Verteilung von Waschflüssigkeit und gasförmigen Produkten und durch die Wasserdampfanreicherung zu Beginn des Reinigungsprozesses, kombiniert mit einer Wasserdampfabreicherung zu Ende des Reinigungsprozesses wird eine sehr effektive Reinigung der gasförmigen Produkte realisiert.

Im unteren Bereich des Wäschers wird dann vorteilhafterweise eine Umlenkung der Strömungsrichtung der gasförmigen Produkte um mehr als 90° vorgenommen, wodurch einerseits der Gasaustritt des gereinigten Gases und andererseits die Abtrennung der flüssigen Bestandteile in einem darunter befindlichen Behälter realisiert werden können.

In dem Behälter zum Auffangen der flüssigen Bestandteile befindet sich eine Wasser-Rapsölmethylester-Emulsion. Rapsölmethylester hat die Eigenschaft, einerseits mit Wasser weitgehend nicht mischbar -, andererseits aber auch ein gutes Lösungsmittel für organische Bestandteile zu sein. So können Wassertropfen durch die Wasser-Rapsölmethylester-Emulsion hindurchtreten, dabei wird das Wasser von den Feststoffen und organischen Bestandteilen befreit und sammelt sich gereinigt unter der Wasser-Rapsölmethylester-Emulsion an. Die Wasser-Rapsölmethylester-Emulsion im oberen Teil des Behälters ist reich an Rapsölmethylester, die Wasser-Rapsölmethylester-Emulsion im unteren Teil des Behälters ist reich an Wasser. Die Emulsion des unteren Bereiches kann wieder dem Wäscher zugeführt werden. Ist der Wasserdampfpartialdruck der gasförmigen Produkte nach Verlassen des Wäschers höher als beim Eintritt in den Wäscher, so wird Wasser aus dem Wäscher entnommen. Über eine Füllstandsregelung im Behälter wird dieses Wasser durch lokal vorhandenes Brauchwasser ersetzt. Im umgekehrten Fall wird Wasser aus den gasförmigen Produkten dem Wasser im Behälter zugeführt. Über einen Beruhigungsbehälter wird in diesem Fall Wasser-Rapsölmethylester-Emulsion, welche mehr als 90 % Wasser enthält, dem Wäscher entnommen, in einer Reinigungsstufe bis zur Einleitfähigkeit ins örtliche Abwassernetz aufgearbeitet und danach entweder ins örtliche Abwassernetz eingeleitet oder für die Abgabe als Nährlösungs-Düngemittel einer Zwischenlagerung zugeführt. Der Rapsölmethylester im Behälter sättigt sich mit den Feststoffen und organischen Bestandteilen an und wird zunehmend gelartig. Teile dieses gelierten Rapsölmethylesters können über einen Beruhigungsbehälter entnommen werden und für die Steuerung der Pyrolyse dem Vorreaktor wieder zugeführt werden.

Sowohl der Wäscher als auch der darunter liegende Behälter mit dem Rapsölmethylester können mit Wärmetauschern umgeben sein, um die Wärmeenergie der gasförmigen Produkte weiter auszunutzen. Durch die Wärmeauskopplung aus dem Wäscher kann der Wassertaupunkt der gasförmigen Produkte im Bereich von 40° C bis 60° C eingestellt werden. Über die Wärmetauscher kann bei Bedarf auch Wärme in die Anlage eingekoppelt werden, um einen Frostschutz in Perioden des Nichtbetreibens der Anlage zu gewährleisten. Mit Hilfe nachfolgender Tropfenabscheider, Doppelrohrwärmetauscher und Seitenkanalgebläse werden die Druckverhältnisse im System und Parameter, wie Druck, relative Feuchte oder Temperatur der gasförmigen Produkte bei Übergabe an die nachfolgenden Prozesse, eingestellt.

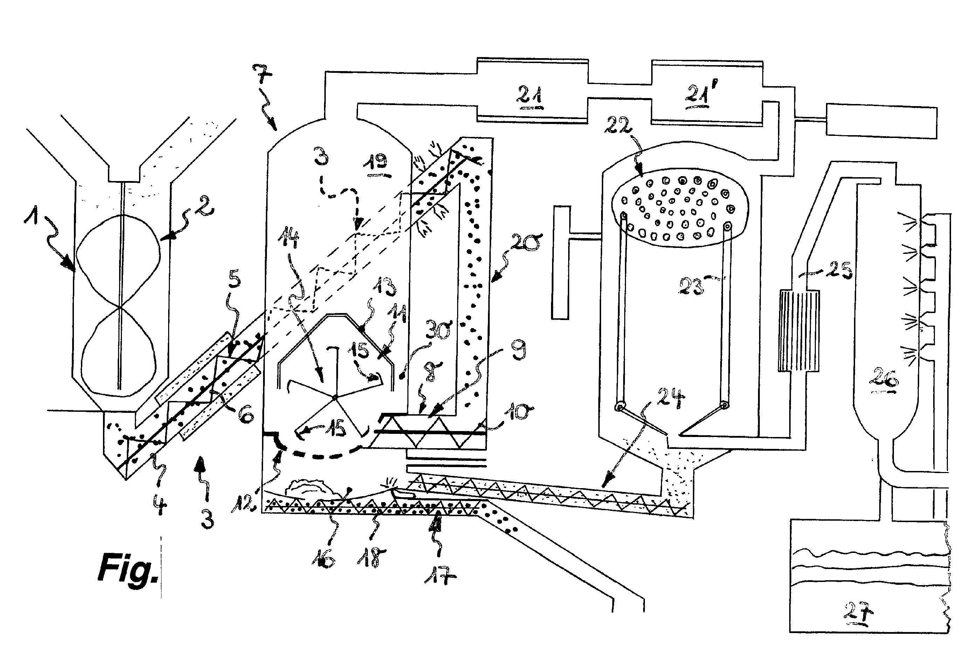

Nachstehend wird die Erfindung anhand eines Ausführungsbeispieles in Verbindung mit der einzigen Figur noch näher erläutert.

In der einzigen Figur ist ein Prozessschema des erfindungsgemäßen Verfahrens mit den ebenfalls erfindungsgemäßen Vorrichtungselementen näher dargestellt:
100 kg/h Holzhackschnitzel mit Abmessungen von durchschnittlich 30 mm Kantenlänge und einem Heizwert von 20 MJ/kg werden als Ausgangsstoffe einem Bioenergieträgerdoseur 1 zugeführt. Der Bioenergieträgerdoseur 1 enthält einen Mischer 2, wodurch die Ausgangsstoffe hinsichtlich ihrer Abmessungen und Zusammensetzungen vergleichmäßigt werden. Die Verweilzeit im Bioenergieträgerdoseur 1 beträgt durchschnittlich eine Stunde. Mit Hilfe einer Dosierschnecke und einer Zellenradschleuse werden diese 100 kg/h Holzhackschnitzel dem Bioenergieträgerdoseur 1 entnommen und dem Vorreaktor 3 zugeführt. Unmittelbar bei Eintritt in den Vorreaktor 3 werden den Holzhackschnitzeln etwa 2 kg/h Kalkgranulat und bei Bedarf 10 kg/h Holzkohle zudosiert. Der Vorreaktor 3 besteht aus einem Edelstahlrohr 4 von etwa 3 m Länge und einem Durchmesser von etwa 500 mm, welches mit einem Winkel von 35° schräg nach oben geneigt angeordnet ist. Im Vorreaktor 3 ist eine Fördereinrichtung 5 vorgesehen, die als nicht mittig gelagerter Schneckenförderer ausgebildet ist und eine innenliegende Förderschnecke 6 von 3 m Länge und einem Durchmesser von 200 mm mit einer Steigung von 100 mm hat. Der erste Meter des Vorreaktors, der Bewegungsrichtung der Holzhackschnitzel folgend gesehen, wird mittels eines wasserführenden partiellen Doppelmantels temperiert. Der daran anschließende Teilbereich des Vorreaktors, der etwa eine Länge von 1,6 m hat, ist im Inneren eines nachfolgenden Reaktors 7 angeordnet. Dadurch werden die eingebrachten Ausgangsstoffe im vorderen Teil des Vorreaktors innerhalb des Reaktors bei 80° bis 250° C getrocknet und dann im hinteren Teil des Vorreaktors, der sich ebenfalls innerhalb des Reaktors 7 befindet, bei 300° bis 600° C pyrolysiert. Im unteren Bereich des Vorreaktors sind Luftschienen in Form von Drehmomentstützen angebracht, durch die insbesondere im Bereich der Pyrolyse Luft mit 20 m³/h eingeblasen wird. Gleichzeitig befinden sich Luftschienen im oberen Bereich des Vorreaktors 3, die sich über die gesamte Länge des Vorreaktors erstrecken, wodurch Luft mit 5 m³/h eingebracht wird, womit die Kinetik hin zur Bildung kurzkettiger Kohlenwasserstoffe bei der Pyrolyse und Entgasung begünstigt wird und gleichzeitig diese Luft als Sperrluft für den Austritt für Pyrolysegas fungiert.

Nach der Pyrolyse der Holzhackschnitzel werden die Pyrolyseprodukte in einem Bereich des Vorreaktors 3 gefördert, der sich außerhalb des Reaktors 7 befindet. Dort ist eine Öffnung im unteren Teil von 200 mm Durchmesser vorgesehen, wodurch alle Pyrolyseprodukte, also Holzkohle, noch nicht oder noch nicht vollständig umgesetzte Holzhackschnitzel, Asche, Schlacke und Rohgas den Vorreaktor 3 mit einer Temperatur von 200° bis 600° C verlassen und über einen als Fallrohr ausgebildeten Führungs- oder Verbindungsschacht 20 von 1,5 m Länge zu einem leicht steigend angeordneten Rohr von 250 mm Durchmesser und 1 m Länge zugeführt werden, in welchem eine dem Reaktor 7 zugeordnete Fördereinrichtung 9 vorgesehen ist. Auch die dem Reaktor 7 zugeordnete Fördereinrichtung 9 ist als Schneckenförderer ausgebildet, der eine fliegend gelagerte Förderschnecke 10 mit 200 mm Durchmesser und 1 m Länge umfasst. Durch die Fördereinrichtung 9 werden die Pyrolyseprodukte in dem als Hochtemperaturzone ausgebildeten mittleren Teil des hohlzylinderförmig ausgebildeten Reaktors 7 eingetragen. Der als Reaktor 7 vorgesehene Hohlzylinder hat einen Innendurchmesser von 1,5 m, ist isoliert und hat dadurch einen Außendurchmesser von 2,1 m. Den unteren Abschluss des als Hochtemperaturzone 11 vorgesehenen mittleren Teils des Reaktors 7 bildet ein Windsichterboden 12, der eine Eintrittsöffnung für die Pyrolyseprodukte und weitere, konzentrisch angeordnete kreisrunde Öffnungen für den Eintritt eines vorgewärmten Luft-Wasserdampf-zirkulierendes Bettmaterial-Gemisches aufweist. Aus Gründen der Strömungsstabilität und der mechanischen Stabilität befindet sich keine der Öffnungen in der Mitte des Windsichterbodens 12. Dabei beträgt der Durchmesser der Öffnungen näher zur Mitte des Windsichterbodens 12 jeweils 30 mm und abnehmend nach außen hin jeweils 15 mm. Im Normalbetrieb werden 200 m³/h auf 400° C vorgewärmte Luft mit etwa 10 kg/h zirkulierendem Bettmaterial eingebracht. Je nach Material können bis zu 20 kg/h Wasser diesem Fluid beigemischt werden. Dieses Luft-Wasserdampf-zirkulierendes Bettmaterial-Gemisch steigt zusammen mit dem Rohgas im mittleren Teil 11 des Reaktors 7 nach oben bis zu einem hier halbkugelförmigen Auffangdom 13, der seitlich mit der die Hochtemperaturzone 11 umschließenden Umfangswandung des Reaktors 7 stoff- und gasdicht verbunden ist. Aufgrund der Dichte der festen Pyrolyseprodukte bildet sich in der Hochtemperaturzone 11 eine schwebende Schichtung der Festprodukte, wobei Asche und nicht oder nicht vollständig verbrannte Schlacke unten, darüber nicht oder nicht vollständig reagierte Holzhackschnitzel und im oberen Bereich der Wirbelschicht Holzkohle angeordnet ist. Durch die Strömung und durch eine Rühreinrichtung 14, die radiale Rührarme mit an den Armende vorgesehenen paddelartigen Rührflächen 15 hat, werden die schwebenden Produkte und das Kalkgranulat immer wieder vermischt, so dass sich eine möglichst vollständige Reaktion aller Bestandteile realisieren lässt und am Kalkgranulat Schlacke und Aschepartikel anhaften können, um Agglomerate beziehungsweise Granulate zu bilden. Die Frequenz und die Drehrichtung der Rühreinrichtung 14 sind variabel und werden zur Beeinflussung des Massenstromes des zirkulierenden Bettmateriales genutzt.

Die Schlacke verbrennt aufgrund des Sauerstoffs in dem eingebrachten Gemisch nahezu vollständig. Der bei der Umsetzung der Schlacke nicht aufgebrauchte Sauerstoff reagiert mit den verbliebenen Holzpartikeln, eventuell dann noch vorhandener Restsauerstoff und das entstehende CO₂ reagieren mit der Holzkohle. Die Holzkohle bewirkt durch Absorptionsreaktionen weiterhin eine Verlängerung der Verweilzeit von ungesättigten Kohlenwasserstoffen in der Hochtemperaturzone. Die Rührflächen 15 sind etwa 100 mm x 100 mm bemessen und drücken Schlacke, Asche, Kalk und Kalk-Schlacke-Asche-Granulat durch die Öffnungen im Windsichterboden 12, während größere Teilchen zu einem Störstoffaustrag, der sich an der Umfangswand befindet und einen Durchmesser von 200 mm hat, bewegt werden. Der Störstoffaustrag ist 200 mm lang und mit bis zu 50 % Sand gefüllt. Der Störstoffaustrag sollte einmal wöchentlich entleert werden.

Die durch den Windsichterboden 12 gedrückten Stoffe treten im unteren Reaktorkammer-Innenraum 16 mit dem dort eingetragenen zirkulierenden Bettmaterial und dem tangential eintretenden vorgewärmten Luft-Wasserdampf-Gemisch in Wechselwirkung. Infolge dieser Wechselwirkung bildet sich in der Mitte des unteren Reaktorkammer-Innenraums 16 des Reaktors 7 ein Kegel aus quasi ausgebranntem Kalk-Schlacke-Asche-Granulat, welches von dort mittels des Ascheaustrages in Form einer Bewegtkammerschleuse von 0,5 1 Volumen und einer Fördereinrichtung in ein Zwischenlager verbracht wird. Diese Fördereinrichtung 17 ist ebenfalls als Schneckenförderer ausgebildet, der eine Förderschnecke 18 von etwa 80 mm Durchmesser hat. Feine Asche, zirkulierendes Bettmaterial und kleine Schlackepartikel werden mit dem Luft-Wasserdampf-Gemisch wieder in die Hochtemperaturzone 11 des Reaktors 7 verbracht.

Im Auffangdom 13 des Reaktors 7 befindet sich eine hier nicht weiter dargestellte Öffnung mit einem Durchmesser von 150 mm, an die sich ein Rohr mit einem Schneckenförderer anschließt. Dieses Rohr führt bis zum Anfangsbereich des Vorreaktors 3. Durch dieses Rohr wird bei Bedarf 10 kg/h Holzkohle aus dem oberen Schichtungsbereich der Wirbelschicht abgezogen und mittels einer Zellenradschleuse den Holzhackschnitzeln in der Trocknungszone des Vorreaktors 3 zugemischt, um die Freisetzung unerwünschter Substanzen bei der Pyrolyse zu minimieren. Weiterhin befinden sich im Auffangdom 13 vorzugsweise sechs konzentrisch angeordnete Öffnungen mit einem Durchmesser von 30 mm, die einen, zu einem oberen Reaktorkammer-Innenraum 19 führenden Verbindungskanal 30 zum Entweichen gasförmiger Produkte aus der Hochtemperaturzone 11 bilden. Durch diesen Verbindungskanal 30 können die gasförmigen Produkte und das zirkulierende Bettmaterial in den oberen Reaktorkammer-Innenraum 19 austreten.

Der Auffangdom 13 weist durch die im unteren Reaktorkammer-Innenraum 16 ablaufenden Prozesse der Verbrennung, der Vergasung und des Crackens eine Temperatur von 600° bis 1.200° C auf, und gibt Wärme über Wärmestrahlung auf den über dem Auffangdom 13 angeordneten Teilbereich des Vorreaktors 3 ab. Weiterhin geben die gasförmigen Produkte, die ebenfalls eine Temperatur von 600° bis 1.200° C aufweisen, auch Wärme beim Kontakt mit dem Vorreaktor 3 ab. Die gasförmigen Produkte werden zusammen mit dem zirkulierenden Bettmaterial durch den Gasaustritt im Deckelbereich des Reaktors 7 abgezogen und zu einer Kühlvorrichtung 21 in Form eines Ringspaltes aus Edelstahl geleitet. Die heißen Prozessgase geben dort einen Teil ihrer Wärme an die im inneren und im äußeren Ringspalt befindliche Luft ab und erwärmen diese auf 500° C. Diese vorgewärmte Luft wird zu dem Windsichterboden 12 und in den ersten Reaktor geleitet. Gegebenenfalls wird mit einer Dralldüse der vorgewärmten Luft zusätzlich noch Wasser zugegeben. Zur besseren Regelbarkeit ist der Ringspalt zweigeteilt aufgebaut. Die Produkte verlassen die Kühlvorrichtung 21 mit einer Temperatur von 400° bis 500° C und werden in einen Heißgasfilter 22 geleitet. Vor Eintritt in den Heißgasfilter 22 werden den gasförmigen Produkten und dem zirkulierenden Bettmaterial in Intervallen von 60 Min. 100 g Additivmaterial zugegeben. Danach werden diese gasförmigen Produkte mit 10 ms und 400 bis 450 m³/h in den Behälter des Heißgasfilters 22 teils tangential, teils gegen ein Prallblech aus Edelstahl geleitet. In dem Behälter des Heißgasfilters 22 sind vorzugsweise etwa 20 Filterkerzen 23 aus Siliziumkarbidkeramik federbelastet hängend angeordnet. Die Filterkerzen 23 haben einen äußeren Durchmesser von 50 mm und einen inneren Durchmesser von 30 mm und sind mit einer filteraktiven Schicht mit einer Schichtdicke von 0,5 mm beschichtet. Diese Schicht weist eine Porosität von 10 % und die Siliziumkarbidkeramik eine Porosität von 20 % auf. Die gasförmigen Produkte werden um die Filterkerzen 23 herumgeführt und aufgrund des geringen Druckes im Inneren der Filterkerzen 23 in den Innenraum der Filterkerzen 23 hineingezogen. Dabei verbleibt das zirkulierende Bettmaterial auf den Filterkerzen 23, welches sich dort als Filterkuchen auf der äußeren Oberfläche der Filterkerzen 23 ablagert. Nach 12 h werden 30 sec Stickstoffimpulse durch die inneren Hohlräume der Filterkerzen 23 mit einem Druck von 600 kPa geblasen, wodurch sich 90 % des Filterkuchens von der äußeren Oberfläche der Filterkerzen 23 ablösen lässt und nach unten fallen kann. Es entstehen 100 kg/12 h Filterkuchen. Dort werden sie über einen quasi gasdichten Austrag ausgetragen und über eine, ebenfalls als Schneckenförderer ausgebildete Fördereinrichtung 24 in den unteren Reaktorkammer-Innenraum 16 des Reaktors 7 zugeführt.

Die gasförmigen Produkte werden über den oberen Teil des Heißgasfilters 22, der gasdicht vom übrigen Behälterbereich abgeschlossen ist, über eine Rohrleitung 25 und einem offenporigen Schaumstrukturfilter in der Rohrleitung 25 (zum Rückhalt von größeren Feststoffen und Bruchstücken der Filterkerzen 23) zu einem Wäscher 26 geführt. Die Temperatur der gasförmigen Produkte nach dem Heißgasfilter 22 beträgt 300° bis 350° C. Die Produkte enthalten nun nicht reaktive Feinstpartikel, gesättigte Kohlenwasserstoffe und das Rohgas. Der Gasstrom wird mit 10 m/s in das senkrecht angeordnete Rohr des vorzugsweise aus Edelstahl hergestellten Wäschers 26 geführt. Das Rohr hat einen Durchmesser von 250 mm und eine Länge von 1.000 mm und ist im unteren Bereich mit einem Winkel von 60° abgeschrägt. Im runden Querschnitt des Rohres befinden sich, untereinander angeordnet, zwanzig Düsenöffnungen, wobei die oberen sechs Düsenöffnungen einen Durchmesser von 10 mm die nächsten sechs Düsenöffnungen einen Durchmesser von 5 mm und die restlichen acht Düsenöffnungen einen Durchmesser von 10 mm aufweisen. Durch diese Öffnungen wird eine Wasser-Rapsölmethylester-Emulsion mit einem Druck von 300 kPa eingedüst. Aufgrund der größeren Düsenöffnungen im oberen und im unteren Bereich entstehen größere Wassertropfen. Auf der Oberfläche der Wassertropfen sammeln sich die feinen Feststoffe an und einige noch vorhandene Kohlenwasserstoffe, wie zum Beispiel Teere, können teilweise auf der Oberfläche der Wassertropfen kondensieren. Aufgrund der Größe der Wassertropfen im oberen Bereich verdampfen diese nicht auf dem Weg zur Wandung des Wäschers 26, die durch die heißen gasförmigen Produkte im oberen Bereich eine Temperatur von 200° bis 300° C aufweist. Das eingebrachte Wasser hat eine Temperatur von 50° C und kühlt die gasförmigen Produkte weiter ab. Im unteren Rohrabschnitt des Wäschers 26 ist ein Gasströmungsbogen mit einem Durchmesser von 60 mm und einem Winkel von 120° zur Senkrechten des Wäschers 26 vorhanden, durch den das dann nahezu vollständig gereinigte Gas mit einer Temperatur von 50° C austritt, in einem Tropfenabscheider vom Resterosol befreit wird, in einem Seitenkanalgebläse auf den regelungstechnisch notwendigen Druck verdichtet wird und in einem wasserführenden Doppelrohrwärmetauscher auf die notwendige Temperatur gebracht wird, bevor es zu einem Motor mit einer Leistung von 150 kWₑₗ geleitet wird.

Das mit Feststoffen, gelösten Salzen und Kohlenwasserstoffen angereicherte Wasser wird im unteren Teil des Wäschers 26 in einem Behälter 27 von 3 m³ Fassungsvolumen aufgefangen und trifft auf eine dort befindliche Wasser-Rapsölmethylester-Emulsion, welche zum überwiegenden Teil aus Rapsölmethylester besteht. Innerhalb von 20 cm hat sich das Verhältnis Wasser-Rapsölmethylester so in Richtung Wasser verschoben, dass 20 cm unterhalb des Flüssigkeitsspiegels nahezu nur noch Wasser vorhanden ist. Das in dieser Emulsion gereinigte Wasser hat eine Temperatur von 50° C und wir dem Wäscher 26 zur Eindüsung wieder zugeleitet. Der Rapsölmethylester reichert sich innerhalb von 500 h mit 50 kg Feststoffen und Kohlenwasserstoffen an und geliert dabei. Teile dieses gelierten Rapsölmethylesters können über einen Beruhigungsbehälter mit 100 l Volumen entnommen werden und für die Steuerung der Pyrolyse dem Vorreaktor wieder zugeführt werden.

Damit entstehen aus dem gesamten Prozess energetisch nicht weiter verarbeitbare Kalk-Schlacke-Asche-Granulat, Wärme und ein energetisch weiterverarbeitbares Gas. Gegebenenfalls kann das Gas auch stofflich genutzt werden.

## Patentansprüche

1. Vorrichtung zur Nutzenergiegewinnung aus Bioenergieträgern und anderen organischen Stoffen mit zumindest einem Reaktor (7), der in seiner Reaktorkammer eine Hochtemperaturzone (11) hat, die vom oberen Reaktorkammer-Innenraum (19) durch einen Auffangdom (13) und vom unteren Reaktor-Innenraum (16) durch einen Windsichterboden (12) abgegrenzt ist, welcher Windsichterboden (12) zur Erzeugung einer Wirbel- oder Feststoffschicht in der Hochtemperaturzone (11) in Richtung zu dieser für Gase und/oder Gasgemische und/oder Wasserdampf und zum Abtransport von Schlacke und Asche für diese in Richtung zum unteren Reaktorkammer-Innenraum (16) durchlässig ist, wobei in der Ringzone zwischen Auffangdom (13) und dem Wandungsinnenumfang der Reaktorkammer wenigstens ein Verbindungskanal (30) zum Entweichen gasförmiger Produkte aus der Hochtemperaturzone in den oberen Reaktorkammer-Innenraum (19) vorgesehen ist, wobei oberhalb des Windsichterbodens (12) wenigstens eine Zufuhröffnung zur Zufuhr der für die Hochtemperaturzone bestimmten Feststoffe und unterhalb des Windsichterbodens (12) mindestens eine Austragsöffnung zum Austragen der im unteren Reaktorkammer-Innenraum befindlichen Asche und/oder Schlacke vorgesehen ist und wobei in der Hochtemperaturzone (11) zwischen Auffangdom (13) und Windsichterboden (12) eine Rühreinrichtung (14) vorgesehen ist, die zur Durchmischung der Wirbel- und/oder Feststoffschicht sowie zum Umwälzen und Zerteilen der auf dem Windsichterboden (12) vorläufig verbliebenen Feststoffe und zum partiellen und temporären Unterbrechen der Wirbelschicht durch temporären mechanischen Verschluss von Öffnungen des Windsichterbodens ausgestaltet ist.

2. Vorrichtung nach Anspruch 1, **dadurch gekennzeichnet, dass** die Vorrichtung einen dem Reaktor (7) vorgeschalteten Vorreaktor (3) zur Pyrolyse der zur Energiegewinnung bestimmten Bioenergieträger und anderen organischen Stoffe hat, der mittels dem Reaktor (7) indirekt beheizbar ist.

3. Vorrichtung nach Anspruch 2, **dadurch gekennzeichnet, dass** der Vorreaktor (3) zumindest mit einem Teilbereich die Reaktorkammer des Reaktors (7) insbesondere im Bereich des oberen Reaktorkammer-Innenraums (19) durchsetzt.

4. Vorrichtung nach Anspruch 3, **dadurch gekennzeichnet, dass** dem die Reaktorkammer durchsetzenden Teilbereich des Vorreaktors (3) ein warmwasserwandtemperierter Teilbereich vorgeschaltet ist.

5. Vorrichtung nach einem der Ansprüche 2 bis 4, **dadurch gekennzeichnet, dass** die zur Energiegewinnung bestimmten Bioenergieträger und anderen organischen Stoffe mittels einer Transporteinrichtung (5) durch den Vorreaktor transportierbar sind.

6. Vorrichtung nach Anspruch 2, **dadurch gekennzeichnet, dass** im Vorreaktor (3) die Einsatzstoffe in wirbelfähige und vorzugsweise im wesentlichen nicht mehr ausgasbare Feststoffe und Gase umsetzbar sind.

7. Vorrichtung nach einem der Ansprüche 1 bis 6, **dadurch gekennzeichnet, dass** die für die Hochtemperaturzone (19) bestimmten Feststoffe mittels einer Transporteinrichtung (9) durch die wenigstens eine Zufuhröffnung in die Hochtemperaturzone (11) des Reaktors (7) einbringbar sind.

8. Vorrichtung nach einem der Ansprüche 5 bis 7, **dadurch gekennzeichnet, dass** die Transporteinrichtung (5, 9) wenigstens eine Förderschnecke (6, 10) hat.

9. Vorrichtung nach Anspruch 8, **dadurch gekennzeichnet, dass** die Förderschnecke (6, 10) außermittig gelagert ist und/oder dass die Förderschnecke (6, 10) auf ihrer Oberseite von der die Förderschnecke (6, 10) umhüllenden Kanal- oder Umfangswandung beabstandet ist.

10. Vorrichtung nach Anspruch 8 oder 9, **dadurch gekennzeichnet, dass** die Förderschnecke (6, 10) fliegend gelagert ist.

11. Vorrichtung nach einem der Ansprüche 8 bis 10, **dadurch gekennzeichnet, dass** die Dreh- und/oder Förderrichtung der Förderschnecke (6, 10) umkehrbar ist.

12. Vorrichtung, insbesondere nach einem der Ansprüche 1 bis 11, **dadurch gekennzeichnet, dass** der Reaktor (7) als geteilter stehender Hohlzylinder ausgebildet ist, der in seinem unteren Reaktorkammer-Innenraum (16) einen tangentialen Eintritt für ein vorgewärmtes Luft-Wasserdampf-Gemisch, einen Eintritt für zirkulierendes Bettmaterial, einen unteren mittig angeordneten Schlackeaustrag in Form einer Bewegtkammer und den darüber angeordneten Windsichterboden (12) aufweist.

13. Vorrichtung nach einem der Ansprüche 1 bis 12, **dadurch gekennzeichnet, dass** die Hochtemperaturzone (11) des Reaktors (7) nach unten durch den Windsichterboden (12), in dessen Bereich neben den Öffnungen für das Luft-Wasserdampf-zirkulierende Bettmaterial-Gemisch auch die wenigstens eine Zufuhröffnung zur Zufuhr der für die Hochtemperaturzone (11) bestimmten Feststoffe vorgesehen ist, und nach oben durch den als Halbkugelstumpfboden ausgebildeten Auffangdom (13) mit dem wenigstens einen, seitlich angeordneten Verbindungskanal (30) zum Entweichen gasförmiger Produkte aus der Hochtemperaturzone (11) begrenzt ist, wobei in der Hochtemperaturzone (11) ein Störstoffaustrag, ein Holzkohleaustrag und die Rührvorrichtung angeordnet sind.

14. Vorrichtung nach einem der Ansprüche 1 bis 13, **dadurch gekennzeichnet, dass** der Reaktor (7) in seinem oberen Reaktorkammer-Innenraum (19) zumindest einen Rohgas-Auslaß für im wesentlichen gasförmige Produkte aufweist.

15. Vorrichtung nach einem der Ansprüche 2 bis 14, **dadurch gekennzeichnet, dass** der Vorreaktor (3) zumindest bereichsweise flüssigkeitswandtemperiert und/oder mit Hilfe des Reaktors (7) strahlungs- und gaskonvektionstemperiert ist.

16. Vorrichtung nach einem der Ansprüche 2 bis 15, **dadurch gekennzeichnet, dass** im Inneren des Vorreaktors (3) eine nicht mittige, unstetig transportierende, fliegend gelagerte und/oder geteilte Transporteinrichtung (5) vorgesehen ist, die mischend wirkt.

17. Vorrichtung nach einem der Ansprüche 1 bis 16, **dadurch gekennzeichnet, dass** in den Vorreaktor-Innenraum über Öffnungen, die am Vorreaktorboden, an der Seite und/oder am Kopf vorgesehen sind, feste und/oder gasförmige Reaktionspartner einbringbar sind.

18. Vorrichtung nach einem der Ansprüche 1 bis 17, **dadurch gekennzeichnet, dass** dem Reaktor (7) und/oder dem Vorreaktor (3) ein Bioenergieträgerdoseur (1) vorgeschaltet ist, der vorzugsweise zur Vergleichmäßigung von Größe und/oder Zusammensetzung der festen Biomasse-/Reststoff-Teilchen und/oder zur Zumischung von Kalk, Holz beziehungsweise Aktivkohle oder dergleichen Additiven ausgestaltet ist.

19. Vorrichtung nach einem der Ansprüche 1 bis 18, **dadurch gekennzeichnet, dass** insbesondere im oberen und/oder unteren Teilbereich der Transporteinrichtung (5) eine Luftzumischeinrichtung vorgesehen ist.

20. Vorrichtung nach einem der Ansprüche 2 bis 19, **dadurch gekennzeichnet, dass** der Vorreaktor (3) in Förderrichtung seiner Transporteinrichtung (5) schräg nach oben orientiert ist und dass die Transporteinrichtung (5) des Vorreaktors (3) mit der, den für die Hochtemperaturzone (11) des Reaktors (7) bestimmten Feststoffen zugeordneten Transporteinrichtung (9) über einen vorzugsweise vertikal orientierten Führungs- oder Verbindungsschacht (20) verbunden ist.

21. Vorrichtung nach einem der Ansprüche 1 bis 20, **dadurch gekennzeichnet, dass** die Rühreinrichtung (14) eine drehantreibbare Welle hat, an der radial orientierte Rührarme gehalten sind.

22. Vorrichtung nach Anspruch 21, **dadurch gekennzeichnet, dass** die Rührarme an ihren freien Armenden vorzugsweise paddelartige Rührflächen (15) aufweisen.

23. Vorrichtung nach einem der Ansprüche 21 oder 22, **dadurch gekennzeichnet, dass** die Drehrichtung der drehantreibbaren Welle umkehrbar ist.

24. Vorrichtung nach einem der Ansprüche 21 bis 23, **dadurch gekennzeichnet, dass** die Rührarme im Bereich ihrer freien Armenden so abgewinkelt oder ausgestaltet sind, dass sie eine Strömungsunterbrechung der durch den Windsichterboden führenden Strömung bewirken.

25. Vorrichtung nach einem der Ansprüche 1 bis 24, **dadurch gekennzeichnet, dass** dem zumindest einen Rohgas-Auslaß wenigstens eine Kühlvorrichtung (21, 21') zum Abkühlen des Rohgases nachgeschaltet ist.

26. Vorrichtung nach Anspruch 25, **dadurch gekennzeichnet, dass** die Kühlvorrichtung (21, 21') einen zylindrischen Ringspalt hat, in welchem das Gas-zirkulierende Bettmaterial-Gemisch hindurchführbar ist und dass am Innenumfang und am Außenumfang des Ringspaltes ein zu erwärmendes gasförmiges Medium hindurchführbar ist.

27. Vorrichtung nach einem der Ansprüche 1 bis 26, **dadurch gekennzeichnet, dass** dem zumindest einen Rohgas-Auslaß und vorzugsweise auch der wenigstens einen Kühlvorrichtung eine Rohgas-Filteranlage (22) nachgeschaltet ist.

28. Vorrichtung nach einem der Ansprüche 1 bis 27, **dadurch gekennzeichnet, dass** die Rohgas-Filteranlage (22) als Heizgasfilter ausgebildet ist, der einen Behälter mit wenigstens einer innenliegenden hohlen Filterkerze (23) aufweist, wobei die Filterkerze (23) aus einem porösen Material hergestellt ist, dessen Porösität von außen bis ins Innere der Filterkerze (23) zunimmt.

29. Vorrichtung nach einem der Ansprüche 1 bis 28, **dadurch gekennzeichnet, dass** die Rohgas-Filteranlage (22) einen tangentialen und einen mit Prallblech versehenen axialen Medieneintritt hat, und dass im unteren Bereich der Rohgas-Filteranlage (22) ein vorzugsweise gasdichter Feststoffaustrag und im oberen Bereich der Rohgas-Filteranlage (22) mindestens ein Gasaustritt vorgesehen ist, in welchem insbesondere ein aus offenporöser Schaumstruktur hergestellter Filter oder Formkörper integriert ist.

30. Vorrichtung nach einem der Ansprüche 1 bis 29, **dadurch gekennzeichnet, dass** dem zumindest einen Rohgas-Auslaß und insbesondere der Rohgas-Filteranlage ein Rohgas-Wäscher (26) nachgeschaltet ist.

31. Vorrichtung nach Anspruch 30, **dadurch gekennzeichnet, dass** der Wäscher (26) als Abscheider für Feststoffe und/oder für kondensierbare beziehungsweise lösliche Stoffe ausgebildet ist, der ein Rohr mit Flüssigkeitseindüsungen quer zur Gasströmung und zur Fallrichtung der Feststoffe hat, welches Rohr mindestens einen Gasaustritt und wenigstens einen Auffangbereich für das mit den Feststoffen und/oder kondensierbaren beziehungsweise löslichen Stoffen angereicherte inkompressible Fluid aufweist, wobei der Abscheider eine überwiegend aus Wasser und Rapsölmethylester bestehende Emulsion als inkompressibles Fluid nutzt, bei der die Eindüsung des inkompressiblen Fludis in Gasströmungsrichtung gesehen so realisiert ist, dass im oberen und im unteren Bereich größere Flüssigkeitstropfen und im mittleren Bereich kleinere Flüssigkeitstropfen eindüsbar sind, bei der der Gasaustritt über einen Gasströmungsbogen mit einem Winkel von mindestens 90° zur Fallrichtung der Teertropfen realisiert ist, bei der in oder um den Auffangbehälter für das inkompressbile Fluid ein Wärmetauscher integriert ist, der Wärme abführt und/oder den Auffangbehälter heizt, und bei der entweder im oder angeschlossen an den Auffangbehälter eine Beruhigungszone für die Emulsion vorgesehen ist, die im unteren Bereich einen Auslaß für das zu reinigende Wasser und im oberen Bereich einen Austrag für eine überwiegend aus Rapsölmethylester bestehende Emulsion aufweist.

32. Verfahren zur Gewinnung eines energetisch weiterverarbeitbaren Gases aus fester Biomasse und organischen Reststoffen, insbesondere in einer Vorrichtung gemäß den Ansprüchen 1 bis 31, wobei in einem kontinuierlichen Prozess Biomasse zunächst pyrolisiert und anschließend unter Zugabe eines Oxidationsmittels thermisch umgesetzt wird und wobei das bei der thermischen Umsetzung erzeugte Rohgas als energetisch weiterverarbeitbares Gas abgetrennt wird, **dadurch gekennzeichnet, dass** die bei der thermischen Umsetzung erzeugte Abwärme über einen Wärmetauscher der im kontinuierlichen Prozess nachfolgenden Biomasse während deren Pyrolyse zugeführt wird.

33. Verfahren nach Anspruch 32, **dadurch gekennzeichnet, dass** das Rohgas zur Abtrennung des energetisch weiterverarbeitbaren Gases durch wenigstens eine Filterkerze geleitet wird.

34. Verfahren nach Anspruch 32 oder 33, **dadurch gekennzeichnet, dass** die an der wenigstens einen Filterkerze abgelagerten Bestandteile des Rohgases der im kontinuierlichen Prozess nachfolgenden Biomasse während deren thermischer Umsetzung zugeführt werden und dass vorzugsweise die Bestandteile des Rohgases dazu dem zum Windsichterboden führenden, insbesondere vorgewärmten Luftstrom zugemischt werden.

35. Verfahren nach einem der Ansprüche 30 bis 34, **dadurch gekennzeichnet, dass** das gefilterte Rohgas gewaschen wird.

36. Verfahren nach einem der Ansprüche 30 bis 35, **dadurch gekennzeichnet, dass** zum Auswaschen eine Emulsion mit Rapsölmethylester verwendet wird.

37. Verfahren nach einem der Ansprüche 30 bis 36, **dadurch gekennzeichnet, dass** der Rapsölmethylester nach dem Auswaschen abgeschieden wird.

38. Verfahren nach einem der Ansprüche 30 bis 37, **dadurch gekennzeichnet, dass** der abgeschiedene Rapsölmethylester der im kontinuierlichen Prozess nachfolgenden Biomasse vor und/oder während deren Pyrolyse zugeführt wird.

39. Verfahren nach einem der Ansprüche 30 bis 38, **dadurch gekennzeichnet, dass** zum Auswaschen dem Rohgas in einem aufrecht ausgerichteten Wascher in einem ersten Abschnitt größere Flüssigkeitstropfen und in einem in Strömungsrichtung folgenden zweiten Abschnitt kleinere Flüssigkeitstropfen zugeführt werden.

40. Verfahren nach einem der Ansprüche 30 bis 39, **dadurch gekennzeichnet, dass** zum Auswaschen dem Rohgas in einem in Strömungsrichtung auf den zweiten Abschnitt folgenden dritten Abschnitt wieder größere Flüssigkeitstropfen zugeführt werden.

41. Verfahren nach einem der Ansprüche 30 bis 40, **dadurch gekennzeichnet, dass** die Pyrolyse und die thermische Oxidation in voneinander getrennten, durch eine Fördereinrichtung verbundenen Reaktionskammern durchgeführt werden.

42. Verfahren nach einem der Ansprüche 30 bis 41, **dadurch gekennzeichnet, dass** der in einem Vorreaktor (3) erwartete Pyrolysetemperaturverlauf durch den gestuften Eintrag von Luft im unteren Teil des Vorreaktors (3) gesteuert wird.

43. Verfahren nach einem der Ansprüche 32 bis 42, **dadurch gekennzeichnet, dass** das Rohgas zur Reinigung von festen Ablagerungen und/oder zur Aufwärmung nachfolgender Apparateteile beim Anfahren des Verfahrens durch Verringerung der Gaskühlung und/oder Variation des Volumenstromes in dem zumindest einen Wärmetauscher genutzt wird.

44. Verfahren nach einem der Ansprüche 30 bis 43, **dadurch gekennzeichnet, dass** in der Kühlvorrichtung (21, 21') eine Strömungsgeschwindigkeit des Gas-zirkulierende Bettmaterial-Gemisches realisiert wird, die einen größeren Strömungswiderstand realisiert, als die Sedimentationskraft der Feststoffe im Gas-zirkulierende Bettmaterial-Gemisch.
